Europäisches Patentamt

European Patent Office

Office européen des brevets

(11) Publication number: **0 194 288 B1**

# EUROPEAN PATENT SPECIFICATION
## published in accordance with Art. 158(3) EPC

(45) Date of publication of patent specification: **27.02.91**   (51) Int. Cl.⁵: **H01R 13/26, H01R 43/01**

(21) Application number: **85904534.6**

(22) Date of filing: **29.08.85**

(86) International application number:
**PCT/US85/01659**

(87) International publication number:
**WO 86/01646 (13.03.86 86/06)**

(54) **AN ELECTRICAL CONNECTOR AND WIRE ASSEMBLY METHOD.**

(30) Priority: **30.08.84 US 645946**

(43) Date of publication of application:
**17.09.86 Bulletin 86/38**

(45) Publication of the grant of the patent:
**27.02.91 Bulletin 91/09**

(84) Designated Contracting States:
**DE FR GB IT NL**

(56) References cited:
**DE-A- 2 523 915**
**FR-A- 975 405**
**FR-A- 2 236 290**
**US-A- 4 514 027**

(73) Proprietor: **AMP INCORPORATED**
**P.O. Box 3608 470 Friendship Road**
**Harrisburg Pennsylvania 17105(US)**

(72) Inventor: **COLDREN, Daniel, Russell**
**536 West Cumberland Street**
**Enola, PA 17025(US)**
Inventor: **DAVIS, Wayne, Samuel**
**32 Ringneck Drive**
**Harrisburg, PA 17112(US)**
Inventor: **FORTUNA, Jon, Alan**
**101 Fetrow Lane**
**New Cumberland, PA 17070(US)**

(74) Representative: **Warren, Keith Stanley et al**
**BARON & WARREN 18 South End Kensington**
**London W8 5BU(GB)**

## Description

The invention relates to an electrical connector and to a method of assembling the discrete wires of a bundle of wires to an electrical connector housing.

A known type of connector housing is formed with a wire receiving duct extending rearwardly from a portion adjacent a contact face and opening at a wire receiving mouth at a rear face, a row of closely spaced contacts being received in respective cavities at the contact face which cavities extend transversely of and communicate with the duct portion. Flat cable, in which a series of wire-like conductors are located in side-by-side relation at the same pitch as the passageways by webs of insulation, may readily be assembled in the housing for termination, by insertion of a free end into and along the duct so that the conductors are aligned with respective contacts. The contacts are then driven into engagement with respective conductors and a rear portion of the housing adjacent the mouth crimped into engagement with the cable to provide strain relief. An example of such connector is described in EP-A-108477.

There is disclosed in FR-A-2 236 290, from which the preambles of present Claims 1,4 and 6 have been derived, an electrical connector having a wire receiving cavity that opens to the exterior of the housing. A row of closely spaced contacts are received in cavities which extend transversely of and communicate with the wire receiving cavity. Wires are inserted into the cavity and there-along where they are terminated by respective contacts.

There is disclosed in DE-A-2 523 915 a wire holder for the assembly of discrete wires to an electrical connector. The wire holder provides a row of wire locating apertures at the same pitch as the contacts of the connector. By inserting the wires into the apertures, a subassembly is formed which brings, prior to connection of the wires to the connector, the discrete wires into alignment with the respective connector contacts.

A problem arises, particularly in the field when it is desired to assemble and terminate, in a connector housing, discrete wires extending from a bundle of wires. The discrete wires cannot readily be maintained in the desired serial positions and at the correct pitch during insertion into the connector when unraveled from the bundle.

From one aspect, the present invention consists in a method of assembling and terminating discrete wires, extending from a bundle of wires, in an electrical connector of the type comprising an insulating housing having a wire receiving duct extending rearwardly from a duct portion adjacent a contact face and opening at a wire receiving mouth at a rear face, and a row of closely spaced contacts received in contact receiving cavities at the contact face, which cavities extend transversely of and communicate with the duct portion, in which method the wires are inserted through the mouth into and along the duct into alignment with the contacts and the contacts are urged into the duct into terminating engagement with the wires, characterized by the steps of respectively loading the discrete wires into wire locating apertures of a wire holder to form a subassembly prior to insertion of the wires into the duct, said apertures being spaced at the same pitch as the contacts, and said wires being slidable in the apertures, and inserting the subassembly into and along the duct thereby to position the discrete wires in alignment with respective contacts.

Preferably, when used with a connector in which the duct portion communicates with an enlarged mouth through a common, divergent wire guiding throat, the subassembly is inserted axially along the duct until the wire holder is arrested by interference with the throat and the wires are then slid or advanced through the holder into the duct portion at the same pitch as the contacts. The wire holder retains the discrete wires at the same pitch as the contacts enabling rapid and accurate termination simply by pushing the cable manually.

From another aspect, the invention consists in an electrical connector comprising an insulating housing having a wire receiving duct extending rearwardly from a duct portion adjacent a contact face and opening at a wire receiving mouth at a rear face, a row of closely spaced contacts received in cavities at the contact face, which cavities extend transversely of and communicate with the duct portion, and a series of discrete wires extending from a bundle and inserted into the duct through the mouth along the duct to the duct portion where they are respectively terminated by contacts urged into the duct portion and into engagement with the wires, characterized by a wire holder, which is a slidable fit in the duct, located in the duct and having wire locating apertures disposed at the same pitch as the contacts, the discrete wires being respectively located in the wire locating apertures, and being a slidable fit therein.

The housing may include a clamping portion deformed into gripping engagement with the wires at a location between the rear face and the wire holder to provide strain relief and retain the wire holder in the housing duct.

Desirably, the apertures open toward the contacts and are in staggered relation with adjacent apertures being located in different rows. This both enables the discrete wires to be maintained at the same close pitch as the contacts and the apertures to be defined by adjacent wall portions in a comb-like structure in spite of the close pitch.

Conveniently, the wires are loaded into the wire holder at locations spaced from their free ends, the free ends trimmed to lengths corresponding to axial lengths of the passageways and throat, and the wire holder then slid along the wires to the free ends. This ensures that the wires are trimmed to the correct length so that they extend sufficiently along the cavities for effective termination in the final axial position of the wire holder relative to the cable.

The apertures may open to only one or both sides of the wire holder providing comb-like structures which facilitate entry of the wires in the holder.

The slots can have resilient wire entry portions of reduced width securely to retain the wires in the apertures throughout the loading step.

From a further aspect, the invention consists in an electrical connector kit comprising an insulating housing having a wire receiving duct extending rearwardly from a duct portion adjacent a contact face and opening at a wire receiving mouth at a rear face, a row of closely spaced contact receiving cavities at the contact face communicating with the duct portions, and contacts respectively disposed in the cavities, characterized by a wire holder having wire locating apertures at the same pitch as the contacts, said wire holder being slidable into the duct mouth when loaded with a series of discrete wires extending from a bundle of wires to bring the discrete wires into alignment with the contacts, and said wire locating apertures being adapted to permit the wires to slide relatively thereto.

Preferably, the duct portion located adjacent the contact face communicates with an enlarged mouth through a divergent throat of smaller size than the wire holder, and movement of the latter along the duct is arrested by abutment with the throat.

An example of the invention will now be described with reference to the accompanying drawings in which:

FIGURE 1 is an isometric view of a known electrical connector in which wires can be terminated according to the method of the invention;

FIGURE 2 is a cross-sectional view of the connector of Figure 1;

FIGURE 3 is a cross-sectional view along line 3-3 of Figure 2;

FIGURE 4 is a rear view of the connector;

FIGURE 5 is an isometric view of a wire holder according to the invention;

FIGURES 6a and 6b are isometric views of first and second steps of loading discrete wires into the wire holder; and

FIGURES 7a through 7d are isometric views showing successive steps of loading a subassembly of the wire holder and wires into the connector and termination of the wires.

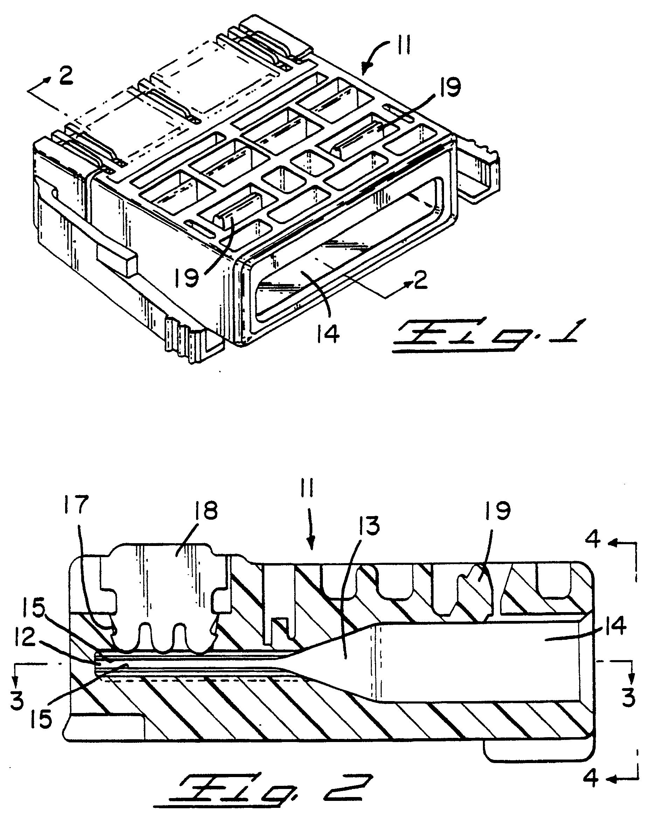

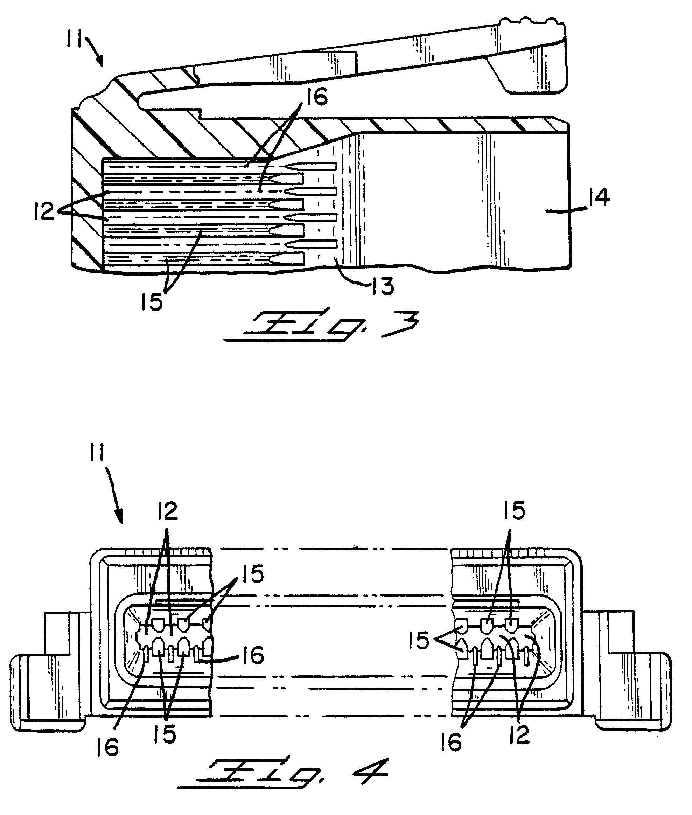

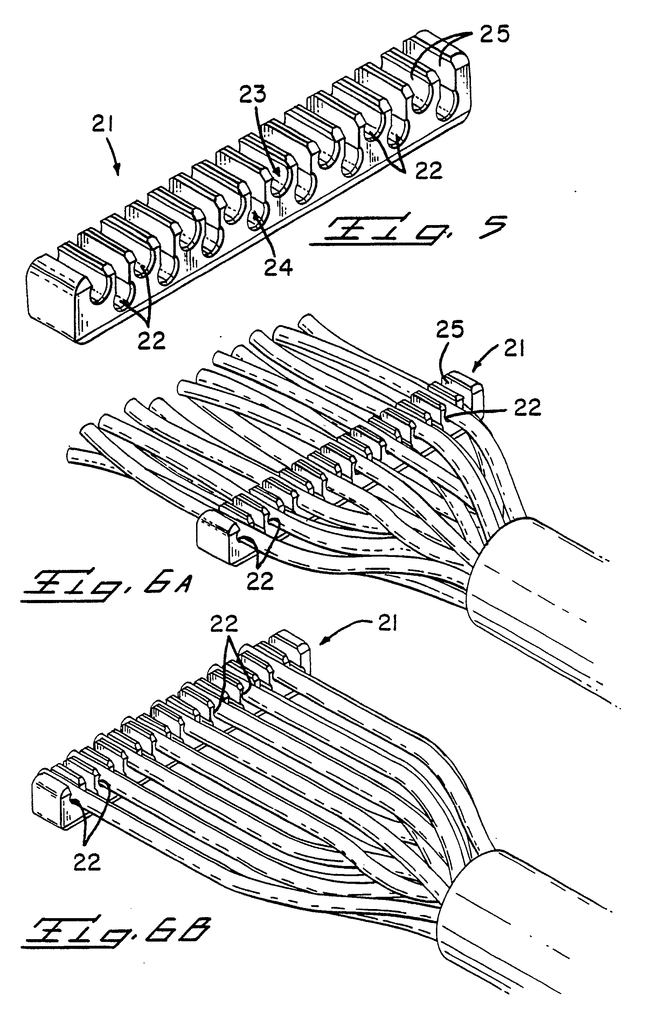

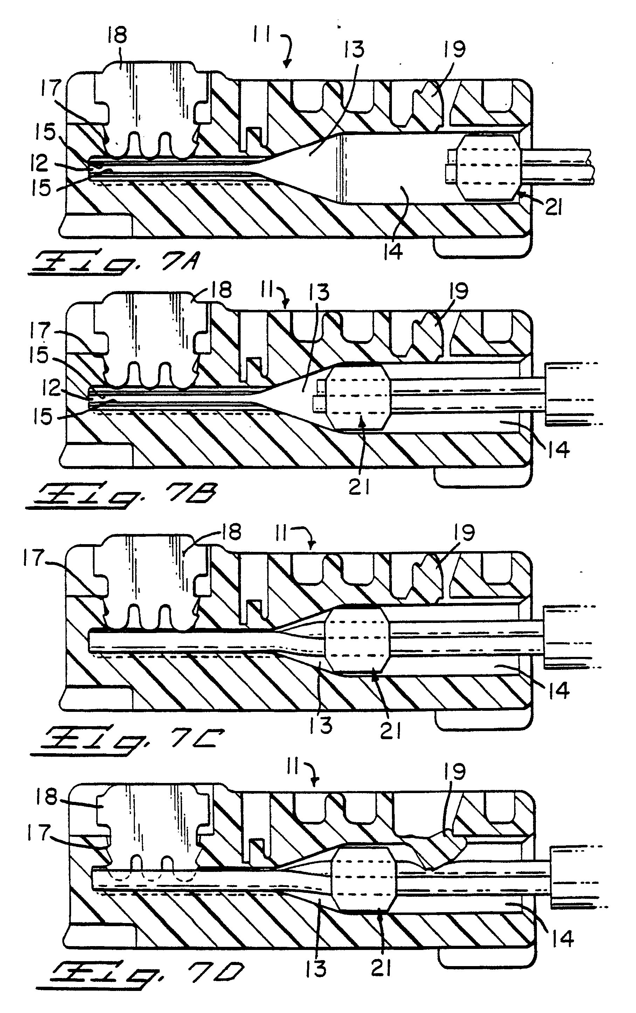

As shown particularly in Figures 1 to 4, a connector suitable for use in the invention is similar to that used for ribbon cable and disclosed in EP-A-108477, the disclosure of which is incorporated herein by reference. Briefly described, the connector comprises a housing 11 moulded in one piece of suitable plastics material formed with a wire receiving duct extending rearwardly from a duct portion, which comprises a single row of blind ended wire receiving passageways 12, adjacent a contact face to a common, divergent, wire guiding throat 13 with a wire receiving mouth 14 of increased size. Lateral walls 15 between adjacent passageways 12 are perforate passageways (for receipt of the insulating web extending between conductors when used with the ribbon cable) and conductor supporting rails 16 extend along the floor of each passageway. Contact receiving cavities 17 at the contact face communicate with the passageways and insulation piercing contacts 18 are preloaded in the cavities for termination with the respective conductors in the passageways. Deformable cable clamping latches 19 are formed in a wall of the mouth for deformation into the mouth into clamping engagement with a cable terminated in the connector.

A wire holder 21 is moulded in one piece of plastics material with a series of staggered wire locating apertures 22 located at the same pitch the passageways 12 but in two rows 23 and 24, having centrelines on opposite sides of the centreline of the passageways, adjacent apertures being in different rows. The apertures open to a common side of the wire holder providing a resilient comb-like structure, walls of the apertures constituting teeth. Wire entry portions 25 of each aperture are of reduced width securely to retain wires in the holder. The overall size of the wire holder is such that it is receivable as a sliding fit in the mouth 14.

In order to assemble ends of discrete wires of a bundle of wires in a shielded cable, the outer insulating jacket is stripped adjacent the end to expose the foil shield which is returned over the jacket. The discrete wires are then unraveled and drawn laterally into the holder in their desired serial position with the holder spaced from the leading edges as shown in Figure 6A. The ends of the discrete wires are then trimmed so that their leading edges are of lengths corresponding to the axial lengths of the passageway plus the axial length of the throat. The wire holder is then slid along the wires to a location adjacent their leading ends thereby holding the leading ends in a fixed position (Figure 6B). The subassembly is then inserted into the mouth (Figure 7A) and advanced by pushing the cable until the wire holder abuts the throat (Figure 7B) when the discrete wires will be advanced through the wire holder guided by the throat into respective passageways as shown in Figure 7C. The contacts 18 are then driven against the wires in known manner and the clamping portion deformed into engagement with the wires behind the wire holder to assist in providing strain relief (Figure 7D).

It will be appreciated that the location of the centrelines of the rows of apertures 23, 24 equidistant from the centreline of the passageway permits the leading ends of the wires to be guided by the throat into the passageways with minimum deviation.

The resiliency of the aperture walls or teeth of the comb-like wire holder adjacent the wire entry ends of the wire holder apertures enables the wires to be loaded therein one-by-one and securely retained therein while remaining wires are manipulated into a desired position

## Claims

1. A method of assembling and terminating discrete wires,extending from a bundle of wires,in an electrical connector of the type comprising an insulating housing (11) having a wire receiving duct (12,13,14) extending rearwardly from a duct portion (12) adjacent a contact face and opening at a wire receiving mouth (14) at a rear face, and a row of closely spaced contacts (18) received in contact receiving cavities (17) at the contact face, which cavities extend transversely of and communicate with the duct portion (12), in which method the wires are inserted through the mouth (14) into and along the duct (12,13,14) into alignment with the contacts (18) and the contacts (18) are urged into the duct (12,13,14) into terminating engagement with the wires, characterized by the steps of respectively loading the discrete wires into wire locating apertures (22) of a wire holder (21) to form a subassembly prior to insertion of the wires into the duct, said apertures (,2) being spaced at the same pitch as the contacts (18), and said wires being slidable in the apertures, and inserting the subassembly into and along the duct (12,13,14) thereby to position the discrete wires in alignment with respective contacts.

2. A method according to claim 1 for use with a connector in which the duct portion (12) communicates with the mouth (14) through a common, divergent wire guiding throat (13), characterized in that the subassembly is inserted axially along the duct until the wire holder (21) is arrested by interference with the throat (13), and the wires are then slid through the holder (21) into the duct portion (12) spaced at the same pitch as the contacts.

3. A method according to claim 2, characterized in that the wires are loaded into the wire locating apertures (22) with the holder (21) spaced from the free ends of the wires, the free ends are trimmed to lengths substantially corresponding to the axial lengths of the duct portion (12) and throat (13), and the holder is slid along the wires to the free ends preparatory to inserting the subassembly into the duct (12,13,14).

4. An electrical connector comprising an insulating housing (11) having a wire receiving duct (12,13,14) extending rearwardly from a duct portion (12) adjacent a contact face and opening at a wire receiving mouth (14) at a rear face, a row of closely spaced contacts (18) received in cavities (17) at the contact face, which cavities (17) extend transversely of and communicate with the duct portion (12), and a series of discrete wires extending from a bundle and inserted into the duct (12,13,14) through the mouth (14) along the duct to the duct portion (12) where they are respectively terminated by contacts (18) urged into the duct portion (12) and into engagement with the wires, characterized by a wire holder (21), which is a slidable fit in the duct (12,13,14), located in the duct and having wire locating apertures (22) disposed at the same pitch as the contacts (18), the discrete wires being respectively located in the wire locating apertures and being a slidable fit therein.

5. An electrical connector according to claim 4, characterized in that the housing (11) comprises a clamping portion (19) deformed into engagement with the wires at a location between the rear face and the wire holder (21).

6. An electrical connector kit comprising an insulating housing (11) having a wire receiving duct (12,13,14) extending rearwardly from a duct portion (12) adjacent a contact face and opening at a wire receiving mouth (14) at a rear face, a row of closely spaced contact receiving cavities (17) at the contact face communicating with the duct portions (12), and contacts (18) respectively disposed in the cavities (17), characterized by a wire holder (21) having wire locating apertures (22) at the same pitch as the contacts (18), said wire holder (21) being slidable into the duct mouth (14) when loaded with a series of discrete wires extending from a bundle of wires to bring the discrete wires into alignment with the contacts (18), and said wire locating apertures (22) being adapted to permit the wires to slide relatively thereto.

7. An electrical connector or kit according to claim 4, 5 or 6, characterized in that the wire locating apertures (22) open to a side of the wire holder towards the contacts.

8. An electrical connector or kit according to claim 4, 5, 6 or 7, characterized in that the duct portion (12) is divided into a row of individual wire receiving passageways which communicate with the mouth (14) through a common, divergent wire guiding throat (13), and the wire locating apertures (22) are in staggered relation with adjacent apertures being in different rows (23,24).

9. An electrical connector or kit according to claim 8, characterized in that the rows of apertures (23, 24) are arranged on opposite sides of the row of wire receiving passageways.

10. An electrical connector or kit according to claim 8 or 9, characterized in that the divergent throat (13) is of smaller size than the wire holder (21) so that sliding movement of the wire holder (21) along the duct (12,13,14) is arrested by abutment with the throat.

**Revendications**

1. Procédé d'assemblage et de terminaison de fils distincts, sortant d'un faisceau de fils, dans un connecteur électrique du type comportant un boîtier isolant (11) présentant un conduit (12, 13, 14) de réception de fils s'étendant vers l'arrière depuis une partie (12) de conduit adjacente à une face de contact et s'ouvrant à une embouchure (14) de réception de fils à une face arrière, et une rangée de contacts étroitement espacés (18) reçus dans des cavités (17) de réception de contacts à la face de contact, lesquelles cavités s'étendent transversalement à la partie de conduit (12) et communiquent avec elle, procédé dans lequel les fils sont insérés à travers l'embouchure (14) dans et le long du conduit (12, 13, 14) jusqu'en alignement avec les contacts (18) et les contacts (18) sont sollicités de façon à pénétrer dans le conduit (12, 13, 14) jusqu'en prise de terminaison avec les fils, caractérisé par les étapes qui consistent à charger respectivement les fils distincts dans des ouvertures (22) de positionnement de fils d'un porte-fils (21) afin de former un sous-ensemble avant l'insertion des fils dans le conduit, lesdites ouvertures (22) étant espacées du même pas que les contacts (18), et lesdits fils pouvant être glissés dans les ouvertures, et à insérer le sous-ensemble dans et le long du conduit (12, 13, 14) afin de placer les fils distincts en alignement avec des contacts respectifs.

2. Procédé selon la revendication 1 à utiliser avec un connecteur dans lequel la partie de conduit (12) communique avec l'embouchure (14) par l'intermédiaire d'une gorge commune divergente (13) de guidage de fils, caractérisé en ce que le sous-ensemble est inséré axialement le long du conduit jusqu'à ce que le porte-fils (21) soit arrêté par serrage avec la gorge (13), et les fils sont ensuite glissés à travers le porte-fils (21) dans la partie de conduit (12) en étant espacés du même pas que les contacts.

3. Procédé selon la revendication 2, caractérisé en ce que les fils sont chargés dans les ouvertures (22) de positionnement de fils alors que le porte-fils (21) est espacé des extrémités libres des fils, les extrémités libres sont coupées à des longueurs correspondant sensiblement aux longueurs axiales de la partie de conduit (12) et de la gorge (13), et le porte-fils est glissé le long des fils jusqu'aux extrémités libres en préparation à l'insertion du sous-ensemble dans le conduit (12, 13, 14).

4. Connecteur électrique comportant un boîtier isolant (11) présentant un conduit (12, 13, 14) de réception de fils s'étendant vers l'arrière depuis une partie de conduit (12) adjacente à une face de contact et s'ouvrant à une embouchure (14) de réception de fils à une face arrière, une rangée de contacts étroitement espacés (18) reçus dans des cavités (17) à la face de contact, lesquelles cavités (17) s'étendent transversalement à la partie de conduit (12) et communiquent avec elle, et une série de fils distincts sortant d'un faisceau et insérés dans le conduit (12, 13, 14) à travers l'embouchure (14) le long du conduit jusqu'à la partie de conduit (12) où ils sont terminés respectivement par des contacts (18) sollicités vers l'intérieur de la partie de conduit (12) et amenés en prise avec les fils, caractérisé par un porte-fils (21), qui peut être ajusté à glissement dans le conduit (12, 13, 14), disposé dans le conduit et présentant des ouvertures (22) de positionnement de fils disposées au même pas que les contacts (18), les fils distincts étant disposés respectivement dans les ouvertures de positionnement de fils et y étant ajustés à glissement.

5. Connecteur électrique selon la revendication 4, caractérisé en ce que le boîtier (11) comprend une partie (19) de bridage amenée par déformation en prise avec les fils en un emplacement situé entre la face arrière et le porte-fils (21).

6. Kit de connecteur électrique comportant un boîtier isolant (11) présentant un conduit (12, 13, 14) de réception de fils s'étendant vers l'arrière depuis une partie de conduit (12) adjacente à une face de contact et s'ouvrant à une embouchure (14) de réception de fils à une face arrière, une rangée de cavités (17) de réception de contacts étroitement espacées à la face de contact, communiquant avec les parties de conduit (12), et des contacts (18) disposés respectivement dans les cavités (17), caractérisé par un porte-fils (21) présentant des ouvertures (22) de positionnement de fils au même pas que les contacts (18), ledit porte-fils (21) pouvant être introduit en glissant dans l'embouchure (14) du conduit lorsqu'il est chargé d'une série de fils distincts sortant d'un faisceau de fils, afin d'amener les fils distincts en alignement avec les contacts (18), et lesdites ouvertures (22) de positionnement de fils étant conçues pour permettre aux fils de glisser par rapport à elles.

7. Connecteur électrique ou kit selon la revendication 4, 5 ou 6, caractérisé en ce que les ouvertures 22 de positionnement de fils s'ouvrent sur un côté du porte-fils vers les contacts.

8. Connecteur électrique ou kit selon la revendication 4, 5, 6 ou 7, caractérisé en ce que la partie de conduit (12) est divisée en une rangée de passages individuels de réception de fils qui communiquent avec l'embouchure (14) par l'intermédiaire d'une gorge commune divergente (13) de guidage de fils, et les ouvertures (22) de positionnement de fils sont dans une disposition en quinconce, des ouvertures adjacentes étant dans des rangées différentes (23, 24).

9. Connecteur électrique ou kit selon la revendication 8, caractérisé en ce que les rangées d'ouvertures (23, 24) sont disposées sur des côtés opposés de la rangée de passages de réception de fils.

10. Connecteur électrique ou kit selon la revendication 8 ou 9, caractérisé en ce que la gorge divergente (13) est d'une dimension inférieure à celle du porte-fils (21) afin qu'un mouvement de glissement du porte-fils (21) le long du conduit (12, 13, 14) soit arrêté par une entrée en butée avec la gorge.

## Ansprüche

1. Verfahren zum Montieren und Anschließen von diskreten Drähten, die von einem Drahtbündel ausgehen, in einem elektrischen Verbinder, der ein isolierendes Gehäuse (11) aufweist, das einen leitungsaufnehmenden Kanal (12, 13, 14) hat, der sich von einem Kanalteil (12) neben einer Kontaktfläche nach hinten erstreckt und an einer Öffnung an einer Drahtaufnahmemündung (14) an einer Rückfläche mündet, wobei eine Reihe eng im Abstand angebrachte Kontakte (18) in kontaktaufnehmenden Hohlräumen (17) an der Kontaktfläche aufgenommen ist, wobei die Hohlräume sich quer zu dem Kanalteil (12) erstrecken und mit diesem in Verbindung stehen, wobei die Drähte durch die Mündung (14) in den und entlang dem Kanal (12, 13, 14) eingeführt und mit den Kontakten (18) ausgerichtet werden, und wobei die Kontakte (18) in den Kanal (12, 13, 14) in Anschluß herstellende Verbindung mit den Drähten gedrückt werden, **gekennzeichnet** durch die Schritte, daß die diskreten Drähte in drahtfestlegende Öffnungen (22) eines Drahtschalters (21) geladen werden, um eine Untereinheit vor dem Einsetzen der Drähte in den Kanal auszubilden, wobei die Öffnungen (22) mit derselben Teilung wie die Kontakte (18) angeordnet sind und die Drähte verschiebbar in den Öffnungen gehalten werden, und daß die Untereinheit in den und längs dem Kanal (12, 13, 14) eingeführt wird, wodurch die diskreten Drähte in Ausrichtung zu den betreffenden Kontakten positioniert werden.

2. Verfahren nach Anspruch 1 zur Verwendung bei einem Verbinder, bei dem der Kanalteil (12) mit der Mündung (14) durch eine gemeinsame, divergierende drahtführende Verengung (13) in Verbindung steht, **dadurch gekennzeichnet,** daß die Untereinheit axial entlang dem Kanal eingeführt wird, bis der Drahthalter (21) durch Eingriff mit der Verengung (1J3 angehalten wird und die Drähte dann durch den Halter (21) in den Kanalteil (12) geschoben werden, der mit gleicher Teilung wie die Kontakte unterteilt ist.

3. Verfahren nach Anspruch 2, **dadurch gekennzeichnet,**
daß die Drähte in die drahtfestlegenden Öffnungen (22) eingeführt werden, wobei der Halter (21) mit Abstand von den freien Drahtenden angeordnet ist, daß die freien Enden im wesentlichen entsprechend der axialen Länge des Kanalteils (12) und der Verengung (13) zugerichtet werden und daß der Halter längs der Drähte zu den freien Enden zur Vorbereitung das Einschiebens der Untereinheit in den Kanal (12, 13, 14) geschoben wird.

4. Elektrischer Verbinder, der ein isolierendes Gehäuse (11) aufweist, welches einen drahtaufnehmenden Kanal (12, 13, 14) hat, der sich von einem Kanalteil (12) neben einer Kontaktfläche nach hinten erstreckt und an einer Drahtaufnahmemündung (14) an einer Rückfläche mündet, wobei eine Reihe eng im Abstand angeordnete Kontakte (18) in kontaktaufnehmendem Hohlräumen (17) an der Kontaktfläche aufgenommen ist, wobei die Hohlräume (17) sich quer zu dem Kanalteil (12) erstrecken und mit diesem in Verbindung stehen, und wobei eine Reihe von diskreten Drähten sich von einem Bündel aus erstreckt und durch die Mündung (14) in den Kanal (12, 13, 14) entlang dem Kanal zu dem Kanalteil (12) eingeführt ist, wo die Drähte an entsprechende Kontakte (18) angeschlossen sind, die in den Kanalteil (12) und in Verbindung mit den Drähten eingedrückt sind, **dadurch gekennzeichnet,**
daß ein Drahthalter (21) der eine gleitende Passung in den Kanal (12, 13, 14) aufweist, in dem Kanal angebracht ist und drahtfestlegende Öffnungen (22) hat, die mit derselben Teilung wie die Kontakte (18) angeordnet sind, wobei die diskreten Drähte jeweils in den drahtfestlegenden Öffnungen festgelegt sind und darin einen gleitenden Sitz haben.

5. Elektrischer Verbinder nach Anspruch 4, **dadurch gekennzeichnet,**
daß das Gehäuse (11) einen Klemmteil (19) aufweist, der zur Verbindung mit den Drähten an einer Stelle zwischen Rückfläche und Drahthalter (21) verformt ist.

6. Elektrischer Verbinderbausatz, der ein isolierendes Gehäuse (11) aufweist, das einen drahtaufnehmenden Kanal (12, 13, 14) hat, welcher sich von einem Kanalteil (12) neben einer Kontaktfläche nach hinten erstreckt und an einer Drahtaufnahmemündung (14) an einer Rückfläche mündet, wobei eine Reihe eng im Abstand angeordneter kontaktaufnehmender Hohlräume (17) an der Kontaktfläche mit den Kanalteilen (12) in Verbindung steht und Kontakte (19) hat, die jeweils in den Hohlräumen (17) angebracht sind, **dadurch gekennzeichnet,**
daß ein Drahthalter (21) vorgesehen ist, der drahtfestlegende Öffnungen (22) mit derselben Teilung wie die Kontakte (18) aufweist, wobei der Drahthalter (21) in die Mündung (14) einschiebbar ist, wenn er mit einer Reihe von diskreten Drähten beschickt ist, die von einem Drahtbündel ausgehen, um die diskreten Drähte in Ausrichtung zu den Kontakten (18) zu bringen, und daß die drahtfestlegenden Öffnungen (22) so augebildet sind, daß es Drähten erlaubt ist, sich in Bezug auf diese zu verschieben.

7. Elektrischer Verbinder oder Bausatz nach Anspruch 4, 5 oder 6,
**dadurch gekennzeichnet,**
daß die drahtfestlegenden Öffnungen (22) zu einer Seite des Drahthalters hin gegen die Kontakte offen sind.

8. Elektrischer Verbinder oder Bausatz nach Anspruch 4,5,6 oder 7,
**dadurch gekennzeichnet,**
daß der Kanalteil (12) in eine Reihe einzelner drahtaufnehmender Durchführungen unterteilt ist, die mit der Mündung (14) durch eine gemeinsame divergierende drahtführende Verengung (13) in Verbindung stehen, und daß die drahtfestlegenden Löcher (22) versetzt zueinander derart angeordnet sind, daß benachbarte Öffnungen in verschiedenen Reihen (23, 24) liegen.

9. Elektrischer Verbinder oder Bausatz nach Anspruch 8,
**dadurch gekennzeichnet,**
daß die Öffnungsreihen (23, 24) an gegenüberliegenden Seiten der Reihe von drahtaufnehmenden Durchführungen angeordnet sind.

10. Elektrischer Verbinder oder Bausatz nach Anspruch 8 oder 9,
**dadurch gekennzeichnet,**
daß die divergierende Verengung (13) kleiner als der Drahthalter (21) ist, so daß eine gleitende Bewegung des Drahthalters (21) längs des Kanals (12, 13, 14) durch Anstoßen an der Verengung angehalten wird.

Fig. 1

Fig. 2

_Fig. 3_

_Fig. 4_

Fig. 5

Fig. 6A

Fig. 6B

Fig. 7A

Fig. 7B

Fig. 7C

Fig. 7D